# FASCICULE DE BREVET EUROPEEN

(11) **EP 2 145 080 B1**
(45) Date de publication et mention de la délivrance du brevet: **01.08.2018**
(21) Numéro de dépôt: 08788124.9
(22) Date de dépôt: 04.04.2008
(51) Int. Cl.: F01D 15/08, F02C 3/10, F02C 7/32, F01D 15/10, F02C 7/26

(54) **TURBOMOTEUR POUR HÉLICOPTÈRE COMPRENANT UN GÉNÉRATEUR DE GAZ ET UNE TURBINE LIBRE**
STRAHLTRIEBWERK FÜR EINEN HUBSCHRAUBER MIT EINEM HAUPTTRIEBWERK UND EINER ZUSÄTZLICHEN TURBINE
GAS TURBINE ENGINE FOR HELICOPTERE COMPRISING A GAS GENERATOR AND A FREE TURBINE

(30) Priorité: 06.04.2007 FR 0754346
(43) Date de publication de la demande: 20.01.2010
(73) Titulaire: Safran Helicopter Engines, 64510 Bordes (FR)
(72) Inventeur: HAEHNER, Edgar, F-64510 Bordes (FR); SENGER, Gérald, F-64160 Morlaas-berlanne (FR)
(74) Mandataire: Balesta, Pierre
(86) Numéro de dépôt international: PCT/FR2008/050601
(87) Numéro de publication internationale: WO 2008/139096

(56) Documents cités:
- EP-A- 1 712 761
- EP-A- 1 852 574
- WO-A-00/20738
- FR-A- 1 530 430
- US-A- 4 062 185
- US-A- 5 929 537
- US-A1- 2004 066 175
- US-A1- 2005 056 021
- US-A1- 2006 066 112

## Description

La présente invention concerne le domaine des turbines à gaz pour un hélicoptère. La présente invention concerne plus particulièrement un turbomoteur pour un hélicoptère, comportant un générateur de gaz et une turbine libre entraînée en rotation par le flux de gaz généré par le générateur de gaz.

Traditionnellement, le générateur de gaz comporte au moins un compresseur centrifuge et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés du fait de la combustion sont ensuite évacués à grande vitesse vers la turbine du générateur de gaz.

Il se produit alors une première détente dans la turbine du générateur de gaz, durant laquelle cette dernière extrait l'énergie nécessaire à l'entrainement du compresseur.

La turbine du générateur de gaz n'absorbe pas toute l'énergie des gaz brûlés et l'excédent d'énergie constitue le flux de gaz généré par le générateur de gaz.

Ce dernier fournit donc de l'énergie cinétique à la turbine libre de sorte qu'il se produit une seconde détente dans la turbine libre qui transforme l'énergie du gaz en énergie cinétique de rotation afin d'entraîner le rotor de l'hélicoptère.

Bien évidemment, le turbomoteur est prévu pour fonctionner dans des limites prescrites, le maintien du turbomoteur dans de telles limites étant effectué en agissant principalement sur le débit de carburant injecté dans la chambre de combustion.

Ainsi, lors d'une phase d'accélération du turbomoteur, notamment en vol, faisant suite à un appel de puissance du pilote, le débit de carburant injecté dans la chambre de combustion augmente, ce qui a pour effet d'augmenter le flux de gaz généré et, par voie de conséquence, la puissance délivrée à la turbine libre.

Cependant, l'accélération doit s'effectuer dans certaines limites afin d'éviter le phénomène de pompage qui est nuisible au turbomoteur. Ce phénomène peut se produire lors d'une accélération trop brutale durant laquelle, en raison d'un débit carburant par trop important, la pression en aval de la chambre de combustion devient supérieure à la pression amont, c'est-à-dire la pression de l'air comprimé refoulée par le compresseur. Dans ce cas, la première détente s'effectue non seulement vers l'aval mais aussi vers l'amont de sorte que le débit des gaz brûlés devient nul et la pression dans le compresseur chute.

Il est bien connu que le phénomène de pompage peut avoir des conséquences fâcheuses sur les pièces constitutives du turbomoteur et sur la puissance délivrée par le turbomoteur.

Comme une phase transitoire d'accélération nécessite une augmentation sensible du débit du carburant, on prévoit généralement une marge (appelée marge de pompage) suffisante pour que le turbomoteur puisse fonctionner sans pompage dans son domaine d'utilisation.

On comprend donc que la capacité d'accélération d'un tel turbomoteur est limitée par la marge de pompage.

EP1712761A2 divulgue un turbomoteur pour un hélicoptère comportant une turbine libre, l'arbre du générateur de gaz et l'arbre de la turbine libre comportant chacun une machine électrique. Les deux machines électriques sont reliées électriquement entre elles pour augmenter l'efficacité du turbomoteur et pour assurer une marge au phénomène de pompage.

Un but de la présente invention est de proposer un turbomoteur pour hélicoptère présentant une meilleure capacité d'accélération tout en ayant la même marge de pompage que celle du turbomoteur de l'art antérieur.

L'invention, selon l'objet de la revendication indépendante 1, atteint son but par le fait qu'il comporte en outre un moteur auxiliaire couplé à un arbre du générateur de gaz, pour fournir une quantité d'énergie cinétique de rotation supplémentaire à l'arbre lors d'une phase d'accélération du turbomoteur. L'arbre du générateur de gaz est celui sur lequel sont montés le compresseur et la turbine.

Au sens de l'invention, le moteur auxiliaire est tout à fait distinct de l'ensemble constitué par la chambre de combustion et la ou les turbines du générateur de gaz, c'est-à-dire qu'il constitue un élément auxiliaire au générateur de gaz.

Ainsi, le moteur auxiliaire, formant des moyens d'assistance à l'accélération du turbomoteur, est apte à fournir un couple de rotation supplémentaire à l'arbre du générateur de gaz lors d'une phase d'accélération en conséquence de quoi l'accélération globale du turbomoteur est avantageusement obtenue par l'augmentation du débit de carburant et par le couple de rotation supplémentaire fourni par le moteur auxiliaire.

Il en résulte avantageusement que grâce à la présence du moteur auxiliaire, il est moins nécessaire d'augmenter le débit de carburant afin d'accélérer le turbomoteur, le moteur auxiliaire fournissant le complément d'accélération.

On comprend donc que le turbomoteur selon la présente invention présentera un taux d'accélération supérieure à celle du turbomoteur de l'art antérieur tout en ayant la même marge de pompage.

Alternativement, un autre intérêt de la présente invention est de pouvoir concevoir des turbomoteurs ayant des marges de pompage réduites, ce qui se traduit par une réduction avantageuse de la taille du turbomoteur.

On comprend aussi que grâce à la présente invention, la réduction du sur-débit de carburant nécessaire à l'accélération étant réduit, la température des parties chaudes du turbomoteur est avantageusement réduite.

Enfin, le turbomoteur selon la présente invention est apte à offrir avantageusement un taux d'accélération constant quelle que soit l'altitude de l'hélicoptère. Selon l'invention, le moteur auxiliaire est un moteur électrique.

Selon une première variante, le moteur auxiliaire est alimenté par une batterie. Selon l'invention, le moteur électrique est alimenté par un premier générateur électrique entraîné en rotation par la turbine libre.

Dans ce cas, on dimensionne le générateur électrique, apte à transformer un mouvement de rotation en courant électrique, afin qu'il ne prélève qu'une faible fraction du couple sur l'arbre de la turbine libre, la majeure partie du couple étant bien évidemment destinée à entraîner en rotation le ou les rotors de l'hélicoptère.

On peut également associer le générateur électrique à une batterie d'appoint si nécessaire.

Selon une autre variante avantageuse, le moteur électrique est alimenté par un premier générateur électrique entrainé en rotation par un rotor de l'hélicoptère.

Pour ce faire, le premier générateur électrique prélève de l'énergie cinétique de rotation sur le rotor, faible devant l'énergie totale de rotation du rotor, afin de la transformer en énergie électrique pour alimenter le moteur électrique auxiliaire couplé à l'arbre du générateur de gaz.

Le rotor d'hélicoptère présente un couple important si bien qu'il fonctionne tel un volant d'inertie, en conséquence de quoi le prélèvement d'énergie sur le rotor ne perturbe pas notablement le vol de l'hélicoptère.

Selon un autre mode de réalisation, le moteur auxiliaire est un moteur hydraulique.

En outre, dans le cadre du fonctionnement du turbomoteur de l'art antérieur décrit ci-dessus, la décélération s'effectue en diminuant sensiblement le débit de carburant.

Tout comme l'accélération, la décélération doit s'effectuer dans certaines limites.

En effet, une diminution trop brutale du débit de carburant peut conduire à l'extinction du turbomoteur, si bien que l'on prévoit également une marge à l'extinction.

On comprend donc que dans l'art antérieur, on ne peut pas diminuer trop rapidement la puissance délivrée à l'hélicoptère à cause du risque d'extinction du moteur.

Un autre but de l'invention est de fournir un turbomoteur offrant une meilleure capacité de décélération.

L'invention atteint son but par le fait que le turbomoteur selon l'invention comporte en outre des moyens d'assistance à la décélération, pour prélever une quantité d'énergie cinétique de rotation sur l'arbre du générateur de gaz lors d'une phase de décélération du turbomoteur.

Ces moyens d'assistance sont auxiliaires, c'est-à-dire qu'ils sont distincts de l'ensemble formé par la chambre de combustion et la turbine du générateur de gaz.

Qui plus est, ils contribuent à la décélération du turbomoteur en diminuant l'énergie de rotation de l'arbre du générateur de gaz. Autrement dit, ils agissent en quelque sorte comme un frein mécanique.

Ainsi, grâce à l'invention, il est possible de diminuer plus rapidement la vitesse de rotation de l'arbre du générateur de gaz sans diminuer trop sensiblement le débit de carburant, c'est-à-dire sans risquer d'éteindre le turbomoteur.

De manière avantageuse, les moyens d'assistance à la décélération comportent un second générateur électrique relié à l'arbre du générateur de gaz.

Lors d'une phase de décélération, on active le second générateur électrique de sorte que celui-ci prélève une partie de l'énergie de rotation de l'arbre du générateur de gaz afin de la transformer en énergie électrique.

De manière préférentielle mais non nécessairement, les moyens d'assistance à la décélération comprennent en outre un accumulateur pour stocker sous forme d'énergie électrique la quantité d'énergie cinétique prélevée par le générateur électrique.

Ainsi l'énergie accumulée pourra-t-elle être réutilisé par les dispositifs électriques de l'hélicoptère et, de manière plus particulièrement avantageuse, par le moteur électrique auxiliaire. Dans ce cas, l'accumulateur peut avantageusement constituer la batterie du moteur électrique auxiliaire.

Autrement dit, l'énergie accumulée par l'accumulateur lors d'une phase de décélération peut être avantageusement utilisée pour alimenter le moteur électrique auxiliaire lors d'une phase d'accélération.

Avantageusement, les moyens d'assistance à la décélération comprennent en outre un second moteur relié à un rotor de l'hélicoptère qui est alimenté par le générateur électrique pour stocker sous forme d'énergie cinétique de rotation dans le rotor de l'hélicoptère la quantité d'énergie cinétique prélevée par le générateur électrique.

Ainsi, lors d'une phase de décélération, l'énergie électrique fournie par le second générateur relié à l'arbre du générateur de gaz est transformée en énergie mécanique par le second moteur couplé au rotor, cette énergie mécanique étant stockée dans le rotor agissant comme un volant d'inertie.

De manière encore plus avantageuse, le moteur auxiliaire est également apte à fonctionner en générateur électrique de sorte que les moyens d'assistance à la décélération comportent ledit moteur fonctionnant en générateur.

Selon un autre mode de réalisation avantageux, le second moteur relié au rotor est également apte à fonctionner comme un générateur électrique afin d'alimenter le moteur auxiliaire relié à l'arbre du générateur de gaz.

Dans une autre variante de l'invention, les moyens d'assistance à la décélération comprennent en outre une pompe hydraulique couplée à l'arbre du générateur de gaz.

L'invention sera mieux comprise et ses avantages apparaîtront mieux à la lecture de la description qui suit, d'un mode de réalisation indiqué à titre d'exemples non limitatifs. La description se réfère aux dessins annexés sur lesquels :
- la figure **1** représente un turbomoteur d'hélicoptère selon la présente invention, qui comporte un moteur auxiliaire couplé à l'arbre du générateur de gaz pour lui fournir une énergie cinétique de rotation supplémentaire ;
- la figure **2** représente de manière schématique un deuxième mode de réalisation de l'invention dans lequel l'énergie fournie à l'arbre du générateur de gaz est prélevée sur le rotor, tandis que l'énergie prélevée sur l'arbre du générateur de gaz peut être stockée dans le rotor ; et
- la figure **3** représente un troisième mode de réalisation de l'invention dans lequel le moteur auxiliaire est un moteur hydraulique et où les moyens d'assistance à la décélération comprennent une pompe hydraulique.

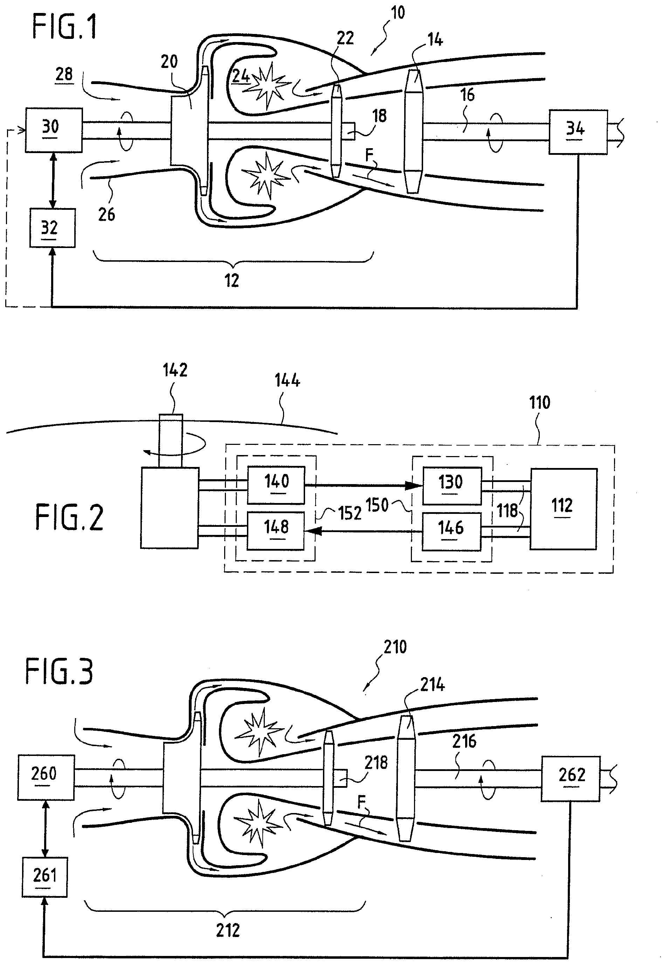

Sur la figure **1****,** on a représenté de façon schématique un turbomoteur **10** conforme à un premier mode de réalisation de l'invention destiné notamment à entrainer en rotation un rotor d'un hélicoptère (non représenté ici), le turbomoteur **10** comportant un générateur de gaz **12** et une turbine libre **14** apte à être entraînée en rotation par un flux de gaz F généré par le générateur de gaz **12.**

La turbine libre **14** est montée sur un arbre **16** qui transmet le mouvement de rotation à un organe récepteur tel un rotor principal de l'hélicoptère.

Le turbomoteur **10** représenté sur la figure **1** est du type à prise de mouvement arrière. On pourrait très bien considérer, sans sortir du cadre de la présente invention, un turbomoteur à turbine libre du type à prise de mouvement avant avec renvoi par arbre extérieur ou bien un turbomoteur à turbine libre du type à prise de mouvement avant avec renvoi par arbre coaxial.

Le générateur de gaz comporte un arbre rotatif **18** sur lequel sont montés un compresseur centrifuge **20** et une turbine **22,** ainsi qu'une chambre de combustion **24** disposée axialement entre le compresseur **20** et la turbine dès lors que l'on considère le générateur de gaz **12** selon la direction axiale de l'arbre rotatif **18.**

Le turbomoteur **10** présente un carter **26** muni d'une entrée d'air **28** par laquelle entre l'air frais dans le générateur de gaz **12.**

Après son admission dans l'enceinte du générateur de gaz **12,** l'air frais est comprimé par le compresseur centrifuge **20** qui le refoule vers l'entrée de la chambre de combustion **24** dans laquelle il est mélangé avec du carburant.

La combustion qui a lieu dans la chambre de combustion **24** provoque l'évacuation à grande vitesse des gaz brûlés vers la turbine **22,** ce qui a pour effet d'entraîner en rotation l'arbre **18** du générateur de gaz **12** et, par conséquent, le compresseur centrifuge **20.**

La vitesse de rotation de l'arbre **18** du générateur de gaz **12** est déterminée par le débit de carburant entrant dans la chambre de combustion **24.**

Malgré l'extraction d'énergie cinétique par la turbine **22,** le flux de gaz F sortant du générateur de gaz présente une énergie significative.

Comme on le comprend à l'aide de la figure **1****,** le flux de gaz F est dirigé vers la turbine libre **14** ce qui a pour effet de provoquer une détente dans la turbine libre **14** conduisant à la mise en rotation de la roue de turbine et de l'arbre **16.**

Conformément à l'invention, le turbomoteur comporte de manière avantageuse un moteur auxiliaire **30** couplé à une extrémité de l'arbre **18** du générateur de gaz **12.**

Dans le premier mode de réalisation représenté sur la figure **1****,** le moteur auxiliaire **30** est un moteur électrique alimenté par un accumulateur **32,** de préférence des types batteries électriques, association de supercondensateurs, ou une combinaison des deux.

Lors d'une phase d'accélération du turbomoteur, le moteur **30** est actionné de manière à fournir avantageusement un supplément d'énergie cinétique de rotation à l'arbre **18** du générateur de gaz **12,** l'accélération de l'arbre du générateur de gaz étant ainsi assistée par le moteur auxiliaire **30.**

Il s'en suit une augmentation plus rapide de la vitesse de l'arbre **18** du générateur de gaz et, par conséquent, d'une augmentation plus rapide de la puissance disponible sur la turbine **14** d'accélération de l'arbre **16** de la turbine libre **14.**

Le couple supplémentaire fourni par le moteur auxiliaire **30** permet donc de manière particulièrement avantageuse d'augmenter le taux d'accélération du rotor, en conséquence de quoi la maniabilité de l'hélicoptère est améliorée. Selon l'invention, le moteur électrique **30** est alimenté par un premier générateur électrique **34** couplé à l'arbre **16** de la turbine libre **14.** Selon l'invention, le premier générateur électrique **34** est également relié à l'accumulateur **32** de manière à pouvoir recharger ce dernier.

Le turbomoteur **10** représenté sur la figure **1** comporte en outre des moyens d'assistance à la décélération destinés à prélever une quantité d'énergie cinétique de rotation sur l'arbre **18** du générateur de gaz **12** lors d'une phase de décélération du turbomoteur **10.**

Ces moyens de décélération comprennent un second générateur électrique qui est de préférence mais non nécessairement constitué par le moteur électrique **30.**

Sans sortir du cadre de la présente invention, on pourrait en effet prévoir que le second générateur se présente sous la forme d'un organe distinct du moteur **30.**

Ainsi, dans ce mode de réalisation, le moteur électrique **30** est également apte à fonctionner en génératrice. Ce type de moteur à fonctionnement inversible est bien connu par ailleurs et ne sera pas décrit en détail ici.

Par soucis de simplicité, le moteur électrique **30** est apte à fonctionner en génératrice sera dénommé « moteur/générateur **30** » dans la suite de la description détaillée.

Lorsqu'il fonctionne en génératrice, le moteur/générateur **30** prélève une quantité d'énergie cinétique de rotation sur l'arbre **18** du générateur de gaz **12** afin de la transformer en énergie électrique.

Il s'en suit que l'énergie cinétique de rotation de l'arbre **18** diminue, en conséquence de quoi l'arbre **18** du générateur de gaz **12** décélère plus rapidement que dans le cas traditionnel où la décélération s'effectue uniquement en diminuant le débit de carburant.

De manière avantageuse, l'énergie électrique produite par le moteur/générateur **30** est stockée, de préférence dans l'accumulateur **32,** afin d'être réutilisée notamment lors de l'assistance à l'accélération en alimentant le moteur/générateur **30** fonctionnant en mode moteur.

De préférence, on place un convertisseur et un dispositif électronique de commande entre l'accumulateur **32** et le moteur/générateur **30,** de manière à piloter les échanges d'énergie électrique entre le moteur/générateur 30 et l'accumulateur 32.

De manière préférentielle, le moteur/générateur **30** est destiné à démarrer le générateur de gaz (c'est-à-dire l'entraîner en rotation) lors d'une phase de démarrage du turbomoteur.

Pour résumer, par rapport aux turbomoteurs connus, le turbomoteur 10 selon le premier mode de réalisation de l'invention comporte en outre un moteur/générateur électrique 30 relié électriquement à un accumulateur 32 tout en étant couplé mécaniquement à un arbre 18 du générateur de gaz 12, l'accumulateur 32 étant apte à alimenter le moteur/générateur lors d'une phase d'accélération du turbomoteur pour fournir une quantité d'énergie cinétique de rotation supplémentaire à l'arbre 18, et étant également apte à stocker sous forme d'énergie électrique une quantité d'énergie cinétique prélevée sur l'arbre du générateur de gaz 18 par le moteur/générateur 30 lors d'une phase de décélération du turbomoteur.

La figure **2** illustre de manière schématique un deuxième mode de réalisation du turbomoteur **110** selon l'invention. Les éléments communs à ceux du premier mode de réalisation portent les mêmes références numériques augmentées de la valeur **100.**

Dans ce deuxième mode de réalisation, le turbomoteur **110** comporte avantageusement un premier moteur électrique auxiliaire **130** apte à fournir une quantité d'énergie supplémentaire à l'arbre **118** du générateur de gaz **112.**

Le premier moteur électrique **130** est avantageusement alimenté par un premier générateur électrique **140** couplé à un arbre **142** du rotor **144** d'un hélicoptère dans lequel est monté le turbomoteur **110,** l'arbre **142** du rotor **144** étant quant à lui couplé à l'arbre de la turbine libre du turbomoteur **110.**

Autrement dit, on puise dans l'énergie cinétique de rotation du rotor **144** une quantité d'énergie que l'on transforme en énergie électrique grâce au premier générateur électrique **140.**

On s'arrange évidemment pour que la quantité d'énergie puisée soit très inférieure à l'énergie cinétique de rotation du rotor **144,** ce qui ne pose pas de difficultés particulières en raison de la valeur significative de l'énergie cinétique du rotor.

Ainsi, selon l'invention, lors d'une phase d'accélération du turbomoteur, on prélève de l'énergie sur le rotor **144** que l'on transmet à l'arbre **118** du générateur de gaz **112** en conséquence de quoi on augmente avantageusement le taux d'accélération du turbomoteur **110.**

Comme on le voit sur la figure **2****,** le turbomoteur **110** comporte en outre des moyens d'assistance à la décélération conformes à l'invention permettant d'augmenter avantageusement le taux de décélération du turbomoteur, qui comprennent un second générateur électrique **146** couplé à l'arbre **118** du générateur de gaz **112,** ainsi qu'un second moteur électrique **148** relié à l'arbre **142** du rotor **144.**

Le second générateur électrique **146,** lorsqu'il est actionné, prélève une quantité d'énergie cinétique de rotation sur l'arbre **118** du générateur de gaz pour la transformer en énergie électrique. Cette dernière est transmise au second moteur électrique **148** qui la transforme à son tour en énergie mécanique pour la transmettre à l'arbre **142** du rotor **144.**

On comprend donc que, selon l'invention, lors d'une phase de décélération, l'énergie prélevée sur l'arbre du générateur de gaz **112** est avantageusement stockée dans le rotor **144** sous forme d'énergie cinétique de rotation et peut être avantageusement réutilisée pour actionner le premier moteur électrique lors d'une phase d'accélération du turbomoteur.

De manière préférentielle, le premier moteur **130** et le second générateur **146** constituent un même dispositif, à savoir un premier moteur/générateur **150,** tandis que le premier générateur **140** et le second moteur **148** constituent préférentiellement un même dispositif électrique, à savoir un second moteur/générateur **152,** chacun des moteur/générateurs étant un moteur apte à fonctionner en génératrice.

En se référant à la figure **3****,** on va maintenant décrire un troisième mode de réalisation d'un turbomoteur **210** conforme à la présente invention.

Sur cette figure, un élément identique à l'un de la figure **1** porte la même référence numérique augmentée de la valeur **200.**

De manière similaire au premier mode de réalisation, le turbomoteur **210** comporte un générateur de gaz **212** muni d'un arbre **218** ainsi qu'une turbine libre **214** ayant un arbre **216.**

Conformément à l'invention, le turbomoteur **210** comporte un moteur auxiliaire hydraulique **260** couplé à l'arbre **218** du générateur de gaz **212,** lequel moteur est destiné à fournir une quantité d'énergie cinétique de rotation à l'arbre **218** du générateur de gaz **212** lors d'une phase d'accélération du turbomoteur **212.**

Ce moteur **260** peut être alimenté par une source hydraulique disposée dans l'hélicoptère, par exemple par une première pompe **262** couplé à l'arbre **216** de la turbine libre **214,** ou tout autre dispositif de stockage, de préférence un accumulateur de pression hydraulique **261.**

Dans ce mode de réalisation, le turbomoteur **210** comporte en outre et de préférence des moyens d'assistance à la décélération comprenant une seconde pompe hydraulique couplée à l'arbre **218** du générateur de gaz **212,** cette seconde pompe étant destinée à prélever une quantité d'énergie cinétique sur l'arbre **218** du générateur de gaz de manière à augmenter le taux de décélération du turbomoteur **210.** De préférence, la seconde pompe hydraulique est constituée par le moteur hydraulique **260** fonctionnant en mode inversé, donc en pompe. On comprend alors que la pompe hydraulique équivaut à un « générateur » hydraulique. L'énergie prélevée peut alors être stockée sous forme d'énergie hydraulique dans l'accumulateur de pression hydraulique **261.**

## Revendications

1. Turbomoteur (10) pour un hélicoptère, comportant un générateur de gaz (12) et une turbine libre (14) entraînée en rotation par le flux de gaz (F) généré par le générateur de gaz, un moteur/générateur électrique (30) relié électriquement à un accumulateur (32) tout en étant couplé mécaniquement à un arbre (18) du générateur de gaz (12), l'accumulateur étant configuré, d'une part, pour alimenter le moteur/générateur (30) lors d'une phase d'accélération du turbomoteur pour fournir une quantité d'énergie cinétique de rotation supplémentaire à l'arbre (18) du générateur de gaz (12) et, d'autre part, pour stocker sous forme d'énergie électrique une quantité d'énergie cinétique prélevée sur l'arbre du générateur de gaz par le moteur/générateur (30) lors d'une phase de décélération du turbomoteur, et en ce que l'accumulateur (32) est relié électriquement à un premier générateur électrique (34) couplé à un arbre (16) de la turbine libre (14), de manière à pouvoir être rechargé par ledit premier générateur électrique (34), l'arbre (16) de la turbine libre (14) étant configuré pour entrainer en rotation le ou les rotors de l'hélicoptère.

2. Turbomoteur (10) selon la revendication 1, **caractérisé en ce qu'**il comporte en outre un convertisseur et un dispositif électronique de commande disposé entre le moteur/générateur (30) et l'accumulateur (32).

3. Turbomoteur (10) selon la revendication 1 ou 2, **caractérisé en ce que** l'accumulateur (32) est une batterie électrique, ou une association de supercondensateurs, ou une combinaison des deux.

4. Turbomoteur (10) selon l'une quelconque des revendications 1 à 3, **caractérisé en ce que** le moteur/générateur est destiné à démarrer le générateur de gaz lors d'une phase de démarrage du turbomoteur.

## Patentansprüche

1. Strahltriebwerk (10) für einen Hubschrauber, aufweisend einen Gasgenerator (12) und eine freie Turbine (14), die von dem von dem Gasgenerator erzeugten Gasstrom (F) rotierend angetrieben wird, einen Elektromotor/Generator (30), der bei mechanischer Kopplung an eine Welle (18) des Gasgenerators (12) mit einem Akkumulator (32) elektrisch verbunden ist, wobei der Akkumulator konfiguriert ist, zum einen, um der Welle (18) des Gasgenerators (12) eine zusätzliche Menge kinetischer Rotationsenergie bereitzustellen, um den Motor/Generator (30) bei einer Beschleunigungsphase des Strahltriebwerks zu versorgen, zum anderen, um eine Menge kinetischer Energie, die der Welle des Gasgenerators von dem Motor/Generator (30) bei einer Verzögerungsphase des Strahltriebwerks entnommen wurde, in Form elektrischer Energie zu speichern, und dass der Akkumulator (32) mit einem ersten Stromgenerator (34), der mit einer Welle (16) der freien Turbine (14) gekoppelt ist, derart elektrisch verbunden ist, dass er durch den ersten Stromgenerator (34) wiederaufladbar ist, wobei die Welle (16) der freien Turbine (14) konfiguriert ist, um den oder die Rotoren des Hubschraubers rotierend anzutreiben.

2. Strahltriebwerk (10) nach Anspruch 1, **dadurch gekennzeichnet, dass** es ferner einen Konverter und eine elektronische Steuervorrichtung aufweist, die zwischen dem Motor/Generator (30) und dem Akkumulator (32) angeordnet ist.

3. Strahltriebwerk (10) nach Anspruch 1 oder 2, **dadurch gekennzeichnet, dass** der Akkumulator (32) eine elektrische Batterie oder ein Verband von Superkondensatoren oder eine Kombination von beidem ist.

4. Strahltriebwerk (10) nach einem der Ansprüche 1 bis 3, **dadurch gekennzeichnet, dass** der Motor/Generator dazu bestimmt ist, den Gasgenerator bei einer Startphase des Strahltriebwerks zu starten.

## Claims

1. Turboshaft (10) for an helicopter, including a gas generator (12) and a free turbine (14) driven in rotation by the gas flow (F) generated by the gas generator, an electric motor/generator (30) electrically connected to a storage unit (32) while being mechanically coupled to a shaft (18) of the gas generator (12), the storage unit being configured, firstly, for powering the motor/generator (30) during a stage of turboshaft acceleration in order to provide a quantity of additional rotational kinetic energy to the shaft (18) and, secondly for storing a quantity of kinetic energy drawn from the gas generator shaft by the motor/generator (30) in the form of electrical energy during a stage of turboshaft deceleration, and the storage unit (32) is electrically connected to a first electric generator (34) coupled to a shaft (16) of the free turbine (14), in order to be capable of being recharged by said first electric generator (34), the shaft (16) of the free turbine (14) being configured to drive the rotor(s) of the helicopter in rotation.

2. A turboshaft (10) according to claim 1, **characterized in that** it further includes a converter and a electronic control device that is positioned between the motor/generator (30) and the storage unit (32).

3. A turboshaft (10) according to claim 1 or claim 2, **characterized in that** the storage unit (32) is an electric battery, or a group of supercapacitors, or a combination of both.

4. A turboshaft (10) according to any one of claims 1 to 3, **characterized in that** the motor/generator is intended to start the gas generator while starting the turbine engine.
